# EUROPEAN PATENT SPECIFICATION

(11) **EP 4 451 223 B1**
(45) Date of publication and mention of the grant of the patent: **09.09.2026**
(21) Application number: 23853727.8
(22) Date of filing: 04.07.2023
(51) Int. Cl.: G02B 21/36, G02B 27/58

(54) **FREQUENCY DOMAIN PHASE RETRIEVAL METHOD AND DEVICE FOR TWO-PHOTON SYNTHETIC APERTURE MICROSCOPE**
FREQUENZBEREICHSPHASENABRUFVERFAHREN UND -VORRICHTUNG FÜR EIN MIKROSKOP MIT SYNTHETISCHER ZWEIPHOTONEN-ÖFFNUNG
PROCÉDÉ ET DISPOSITIF DE RÉCUPÉRATION DE PHASE DANS LE DOMAINE FRÉQUENTIEL POUR MICROSCOPE À OUVERTURE SYNTHÉTIQUE À DEUX PHOTONS

(30) Priority: 07.03.2023 CN 202310254841
(43) Date of publication of application: 23.10.2024
(73) Proprietor: Tsinghua University, Haidian District Beijing 100084 (CN)
(72) Inventor: DAI, Qionghai, Beijing 100084 (CN); ZHAO, Zhifeng, Beijing 100084 (CN); WU, Jiamin, Beijing 100084 (CN)
(74) Representative: Kransell & Wennborg KB
(86) International application number: PCT/CN2023/105686
(87) International publication number: WO 2024/183196

(56) References cited:
- WO-A1-2021/026381
- CN-A- 108 364 342
- CN-A- 108 550 108
- CN-A- 109 615 651
- US-A1- 2011 249 866
- US-A1- 2015 160 450
- US-A1- 2022 283 443
- US-B2- 11 092 795
- B. M. HANSER ET AL: "Phase-retrieved pupil functions in wide-field fluorescence microscopy", JOURNAL OF MICROSCOPY, vol. 216, no. 1, 1 October 2004 (2004-10-01), pages 32 - 48, XP055138024, ISSN: 0022-2720, DOI: 10.1111/j.0022-2720.2004.01393.x
- LEE DENNIS J. ET AL: "Optical phase imaging using a synthetic aperture phase retrieval technique", vol. 22, no. 8, 21 April 2014 (2014-04-21), US, pages 9380, XP093234183, ISSN: 1094-4087, Retrieved from the Internet <URL:https://opg.optica.org/directpdfaccess/fb03b4bc-fb25-4cc5-bef5b9bee8daf642_282928/oe-22-8-9380.pdf?da=1&id=282928&seq=0&mobile=no> DOI: 10.1364/OE.22.009380
- M.R. FOREMAN ET AL: "Phase-retrieved pupil function and coherent transfer function in confocal microscopy", JOURNAL OF MICROSCOPY, vol. 251, no. 1, 20 May 2013 (2013-05-20), pages 99 - 107, XP055153582, ISSN: 0022-2720, DOI: 10.1111/jmi.12050
- WU JIAMIN ET AL: "Iterative tomography with digital adaptive optics permits hour-long intravital observation of 3D subcellular dynamics at millisecond scale", CELL, ELSEVIER, AMSTERDAM NL, vol. 184, no. 12, 25 May 2021 (2021-05-25), pages 3318, XP086614293, ISSN: 0092-8674, [retrieved on 20210525], DOI: 10.1016/J.CELL.2021.04.029

## Description

### TECHNICAL FIELD

The present application relates to the technical field of phase retrieval, and particularly relates to a frequency domain phase retrieval method and apparatus for two-photon synthetic aperture microscopy.

### BACKGROUND

A Phase Retrieval (PR) method is a technology that is usually used in wide-field microscopy and super-resolution microscopy. In the wide-field microscopy, an ideal system without optical distortion has pupil functions whose phases are all zero. Due to inevitable optical distortion of the system, an extra phase difference will be introduced on a pupil plane. In a process of reconstructing images through deconvolution, the images are reconstructed by a Point Spread Function (PSF) of the system established by an optical wave model, and quality of the reconstructed images will be decreased due to the phase difference brought by the optical distortion. The phases of the pupil functions of the optical system are restored by the phase retrieval method, so that a PSF matched with actual performance of the optical system is well established, and finally a diffraction limit deconvolution reconstruction image is acquired. However, in the super-resolution microscopy such as single molecule localization microscopy, super-resolution fluorescence microscopy and stimulated emission depletion microscopy, the phase retrieval method is more widely used, particularly some microscopic methods involving PSF engineering technology. The phase retrieval method is an essential link in the image reconstruction process.

In related art, depending on three-dimensional imaging capability of a wide-field microscopy imaging technology, three-dimensional information may be reconstructed by light field microscopy; and angle information is decoded into the three-dimensional information by using the PSF of the microscopy system.

However, in the related art, problems that optical strength distribution is changed since a micro-lens array used for generating multi-angle information is arranged on a pupil plane or an image plane of light field microscopy, phase retrieval is difficult, effect and quality of an image reconstruction result are difficultly increased and higher reconstruction performance cannot be ensured urgently need to be solved. B. M. HANSER ET AL., "Phase-retrieved pupil functions in wide-field fluorescence microscopy" discloses phase-retrieved pupil functions in wide-field fluorescence microscopy. LEE DENNIS J. ET AL., "Optical phase imaging using a synthetic aperture phase retrieval technique" discloses optical phase imaging using a synthetic aperture phase retrieval technique. M.R. FOREMAN ET AL., "Phase-retrieved pupil function and coherent transfer function in confocal microscopy" discloses phase-retrieved pupil function and coherent transfer function in confocal microscopy. US 2022/283443 A1 discloses pinpointing single molecule positions with in situ point spread function retrieval for three dimensional nanoscopy of whole cells and tissues. WU JIAMIN ET AL., "lterative tomography with digital adaptive optics permits hour-long intravital observation of 3D subcellular dynamics at millisecond scale" discloses iterative tomography with digital adaptive optics permits hour-long intravital observation of 3D subcellular dynamics at millisecond scale. US 11092795 B2 discloses systems and methods for coded-aperture-based correction of aberration obtained from Fourier Ptychography

### SUMMARY

The present application provides a frequency domain phase retrieval method and apparatus for a two-photon synthetic aperture microscopy, for solving problems in related art that optical strength distribution is changed since a micro-lens array used for generating multi-angle information is arranged on a pupil plane or an image plane of light field microscopy, making the phase retrieval difficult, such that a higher quality of a reconstructed image and a higher image reconstruction performance cannot be ensured.

The invention is set out in the appended set of claims.

Embodiments in a first aspect of the present application provide a frequency domain phase retrieval method for a two-photon synthetic aperture microscopy. The method includes:
S1: sequentially performing phase retrieval at a plurality of single viewing angles based on the two-photon synthetic aperture microscopy to generate phase retrieval pupil functions at the plurality of single viewing angles, wherein for each viewing angle among the plurality of viewing angles, the phase retrieval pupil function is obtained by using a pupil function obtained from a previous viewing angle as an initial estimate to perform phase retrieval for a current viewing angle, thereby implementing aperture synthesis;
S2: traversing all the plurality of single viewing angles in a light field, to obtain a pupil function after one round of iteration; and
S3: generating a final pupil function by iteratively performing the operations of S1 and S2 until a phase distribution of the pupil function after multiple rounds of iteration converges, to characterize pupil function phase distribution of systematical distortion.

In an embodiment of the present application, the performing phase retrieval at the plurality of single viewing angles to generate the phase retrieval pupil functions at the plurality of single viewing angles comprises:collecting axial multi-layer Point Spread Functions, PSFs, of the two-photon synthetic aperture microscopy excited at the plurality of viewing angles; and generating the phase retrieval pupil functions based on the axial multi-layer PSFs to simulate an objective lens and phase differences in an optical system.

In an embodiment of the present application, using the phase retrieval pupil function at the previous viewing angle as the initial estimation for phase retrieval at the current viewing angle to implement aperture synthesis comprises:obtaining the initial estimation based on phase points of the phase retrieval pupil function at the previous viewing angle and a strength distribution matrix of optical strength at the previous viewing angle.

In an embodiment of the present application, the method further includes: extracting Point Spread Functions, PSFs, from the final pupil function; and performing deconvolution for three-dimensional reconstruction based on the PSFs to generate a reconstruction result.

Embodiments in a second aspect of the present application provide a frequency domain phase retrieval apparatus for a two-photon synthetic aperture microscopy. The apparatus includes:
a first generating module configured to sequentially perform phase retrieval at a plurality of single viewing angles based on the two-photon synthetic aperture microscopy to generate phase retrieval pupil functions at the plurality of single viewing angles, wherein for each viewing angle among the plurality of viewing angles, the phase retrieval pupil function is obtained by using a pupil function obtained from a previous viewing angle as an initial estimate to perform phase retrieval for a current viewing angle, thereby implementing aperture synthesis;
an obtaining module configured to traverse all the plurality of single viewing angles in a light field, to obtain a pupil function after one round of iteration; and
a characterizing module configured to generate a final pupil function by iteratively performing the operations configured for the first generating module and the obtaining module until a phase distribution of the pupil function after multiple rounds of iteration converges, to characterize pupil function phase distribution of systematical distortion.

In an embodiment of the present application, the first generating module includes:
a collection unit configured to collect axial multi-layer Point Spread Functions, PSFs, of the two-photon synthetic aperture microscopy excited at the plurality of viewing angles; and a simulation unit configured to generate the phase retrieval pupil functions based on the axial multi-layer PSFs to simulate an objective lens and phase differences in an optical system.

In an embodiment of the present application, the obtaining module includes: an obtaining unit configured to obtain the initial estimation based on phase points of the phase retrieval pupil function at the previous viewing angle and a strength distribution matrix of optical strength at the previous viewing angle.

In an embodiment of the present application, the apparatus further includes: an extracting module configured to extract Point Spread Functions, PSFs, from the final pupil function; and a second generating module configured to perform deconvolution for three-dimensional reconstruction based on the PSFs to generate a reconstruction result.

Embodiments in a third aspect of the present application provide an electronic device. The electronic device includes a memory, a processor, and a computer program stored in the memory and executable on the processor. The processor, when executing the computer program, implements the frequency domain phase retrieval method for two-photon synthetic aperture microscopy according to the above embodiments.

Embodiments in a fourth aspect of the present application provide a computer readable storage medium. A computer program is stored on the computer readable storage medium. The computer program, when executed by the processor, implements the above frequency domain phase retrieval method for two-photon synthetic aperture microscopy.

In the embodiments of the present application, the Point Spread Functions of the system under different viewing angles calculated through the pupil function, effect of a reconstruction algorithm and quality of a reconstruction result in the two-photon synthetic aperture microscopy method are increased; and the PSFs extracted from the pupil function are subjected to deconvolution for three-dimensional reconstruction by estimating the phase difference in the optical system, so that excellent reconstruction performance is ensured, and the performance is better than that of theoretical PSFs generated under a rotational average and an ideal situation. Therefore, the problems in the related art that optical strength distribution is changed since a micro-lens array used for generating multi-angle information is arranged on a pupil plane or an image plane of light field microscopy, phase retrieval is difficult, the effect and the quality of the image reconstruction result are difficultly increased and higher reconstruction performance cannot be ensured are solved.

Additional aspects and advantages of the present application will be partially described below, and will be partially obvious in descriptions below or understood through practice of the present application.

### BRIEF DESCRIPTION OF DRAWINGS

The above and/or additional aspects and advantages of the present application will be obvious and easily understood in descriptions of the embodiments in combination with drawings below, wherein:
Fig. 1 is a flow chart of a frequency domain phase retrieval method for a two-photon synthetic aperture microscopy according to embodiments of the present application;
Fig. 2 is a principle diagram of a frequency domain phase retrieval method for a two-photon synthetic aperture microscopy according to an embodiment of the present application;
Fig. 3 is a flow chart of a frequency domain phase retrieval method for a two-photon synthetic aperture microscopy according to an embodiment of the present application;
Fig. 4 is an algorithm flow chart of a frequency domain phase retrieval method for a two-photon synthetic aperture microscopy according to an embodiment of the present application;
Fig. 5 is a schematic structural diagram of a frequency domain phase retrieval apparatus for a two-photon synthetic aperture microscopy according to embodiments of the present application; and
Fig. 6 is a schematic structural diagram of an electronic device according to embodiments of the present application.

### DESCRIPTION OF EMBODIMENTS

Embodiments of the present application will be described in detail below. Examples of the embodiments are illustrated in the drawings, through which identical or similar symbols refer to identical or similar components or components having identical or similar functions. Embodiments described with reference drawings below are illustrative and are intended to be used for explaining the present application rather than limiting the present application.

A frequency domain phase retrieval method and apparatus for two-photon synthetic aperture microscopy according to embodiments of the present application are described below with reference to drawings. With respect to problems in related art mentioned in the background that optical strength distribution is changed since a micro-lens array used for generating multi-angle information is arranged on a pupil plane or an image plane of light field microscopy, phase retrieval is difficult, effect and quality of the image reconstruction result are difficultly increased and higher reconstruction performance cannot be ensured, the present application provides a frequency domain phase retrieval method for a two-photon synthetic aperture microscopy. In the method, point spread functions of the system under different viewing angles are calculated through the pupil function, effect of a reconstruction algorithm and quality of a reconstruction result in the two-photon synthetic aperture microscopy method are increased; and PSFs extracted from the pupil function are subjected to deconvolution for three-dimensional reconstruction by estimating the phase difference in the optical system, so that better reconstruction performance is ensured, and the performance is better than that of theoretical PSFs generated under a rotational average and an ideal situation. Therefore, the problems in the related art that the optical strength distribution is changed since the micro-lens array used for generating multi-angle information is arranged on the pupil plane or the image plane of light field microscopy, phase retrieval is difficult, the effect and the quality of the image reconstruction result are difficultly increased and better reconstruction performance cannot be ensured are solved.

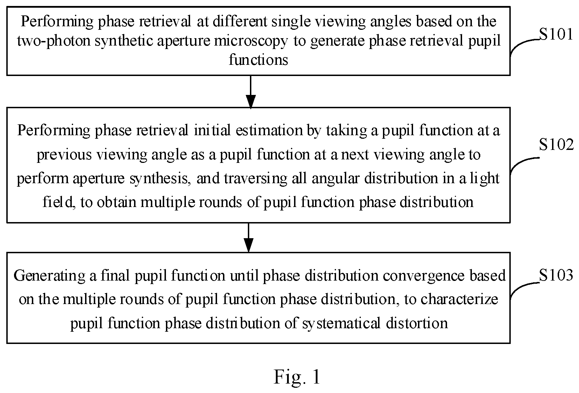

Specifically, Fig. 1 is a flow chart of a frequency domain phase retrieval method for two-photon synthetic aperture microscopy according to embodiments of the present application.

As shown in Fig. 1, the frequency domain phase retrieval method for two-photon synthetic aperture microscopy includes the following actions.

In the action at S101, phase retrieval is performed at different single viewing angles based on the two-photon synthetic aperture microscopy to generate phase retrieval pupil functions.

It can be understood that, the two-photon synthetic aperture microscopy in the embodiments of the present application is an imaging technology whose excitation at different angles is obtained by a light beam with a diameter much smaller than an aperture of an objective lens entering the objective lens perpendicular to an aperture plane from different positions. An optical strength distribution on the aperture plane of the objective lens is different with incidence at different angles. However, the phase brought by systematical distortion is constant. Therefore, in the embodiments of the present application, a full-aperture distortion phase may be calculated from small-aperture imaging results at different angles to be used for estimating PSFs of the optical system at all the angles.

During actual execution according to embodiments of the present application, the phase retrieval is performed at different single viewing angles based on an imaging characteristic of the two-photon synthetic aperture microscopy to generate phase retrieval pupil functions. For example, an estimated pupil function is generated from a three-dimensional strength PSF by using a phase retrieval algorithm provided by Hanser et al. Thus, basis is provided for simulating an objective lens and a phase difference in the optical system through the generated pupil function; and the pupil function is easily modified by calculating a phase difference function, so that characteristics of the PSFs under a phase difference imaging condition are reproduced exactly, thereby increasing effect of the reconstruction algorithm and quality of the reconstruction result in the two-photon synthetic aperture microscopy method.

In an embodiment of the present application, the performing phase retrieval at different single viewing angles to generate the phase retrieval pupil functions includes: collecting axial multi-layer Point Spread Functions, PSFs, of the two-photon synthetic aperture microscopy excited at different viewing angles; and generating the pupil functions based on the axial multi-layer PSFs to simulate an objective lens and phase differences in the optical system.

As a possible implementation according to the embodiments of the present application, the axial multi-layer Point Spread Functions, PSFs, of the two-photon synthetic aperture microscopy excited at different viewing angles may be collected; measured strength values of the PSF at different axial positions may replace a calculated strength distribution; and the pupil function may be generated through the axial multi-layer PSF. Therefore, the objective lens and the phase difference in the optical system are simulated; and accuracy of reproduced characteristics of PSFs under the phase difference imaging condition is further ensured.

In the action at S102, phase retrieval initial estimation is performed by taking a pupil function at a previous viewing angle as a pupil function at a next viewing angle to perform aperture synthesis, and all angular distribution in a light field is traversed to obtain multiple rounds of pupil function phase distribution.

It can be understood that, the phase retrieval technology is generally as follows: when the aperture of the objective lens is filled, a distortion phase is restored by fully utilizing Numerical Aperture (NA) of the objective lens, and two-photon synthetic aperture imaging may be performed. The aperture of the objective lens at a single viewing angle is generally not filled.

During actual execution according to the embodiments of the present application, the phase retrieval initial estimation may be performed by taking the pupil function estimated from the previous viewing angle as the pupil function at the next viewing angle, to perform the next aperture synthesis, and multiple rounds of pupil function phase distribution after aperture synthesis may be obtained after all angular distribution in the light field is traversed. Therefore, the PSF for the incoming object from multiple angles realizes large-aperture synthesis from small-apertures; and implementation difficulty of the phase retrieval is decreased.

In an embodiment of the present application, the performing phase retrieval initial estimation by taking the pupil function at the previous viewing angle as the pupil function at the next viewing angle to perform aperture synthesis includes: obtaining the initial estimation based on phase points obtained at the previous viewing angle and a strength distribution matrix of optical strength at the previous viewing angle.

During actual execution according to the embodiments of the present application, the initial estimation at the next viewing angle may be obtained by multiplying the phase points obtained at the previous viewing angle by a matrix that takes the optical strength distribution at the previous viewing angle as weights, thereby providing a better systematic PSF for subsequent reconstruction and ensuring an image reconstruction result with best quality.

In the action at S103, a final pupil function is generated until phase distribution convergence based on the multiple rounds of pupil function phase distribution, to characterize pupil function phase distribution of systematical distortion.

During actual execution according to the embodiments of the present application, the phase retrieval initial estimation may be iterated and all the angular distribution in the light field may be traversed based on the multiple rounds of pupil function phase distribution after aperture synthesis; and the final pupil function is generated until phase distribution convergence to characterize the pupil function phase distribution of systematical distortion, thereby increasing quality of the image reconstruction result and further ensuring that the performance is better than that of theoretical PSFs generated under a rotational average and an ideal situation.

In an embodiment of the present application, the method further includes: extracting PSFs from the final pupil function; and performing deconvolution for three-dimensional reconstruction based on the PSFs to generate a reconstruction result.

It can be understood that, a phase difference will be brought to an optical system due to inevitable distortion. The phase retrieval method in the embodiments of the present application may effectively estimate the phase distribution of the pupil plane and generate new PSFs at multiple angles by using the estimated phase.

During actual execution, since the phase difference in the optical system may be estimated in the embodiments of the present application, and the generation process of the PSFs is matched with the objective lens model, the PSFs may be extracted from the final pupil function, and the extracted PSFs are subjected to deconvolution for three-dimensional reconstruction to generate a reconstruction result, thereby ensuring that the performance is better than that of theoretical PSFs generated under a rotational average and an ideal situation.

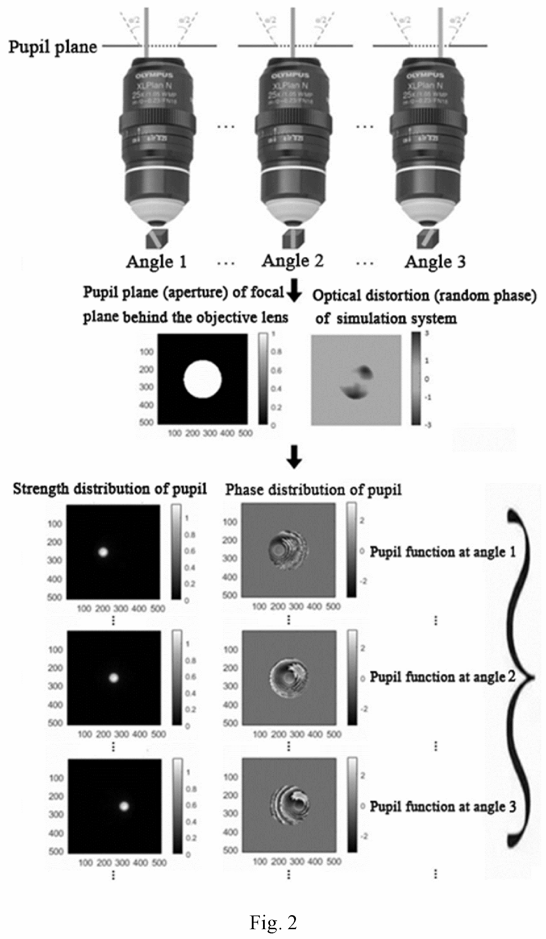

Specifically, as shown in Figs. 2 to 4, operating principles of the frequency domain phase retrieval method for two-photon synthetic aperture microscopy in the embodiments of the present application are described in detail by virtue of a specific embodiment.

As shown in Fig. 2, the imaging principle of the two-photon synthetic aperture microscopy in the embodiments of the present application is as follows: multiple small-aperture light beams at different viewing angles enter the objective lens, and optical imaging of extending two-photon excitation depth of field is formed. The small-aperture light beams enter the pupil plane of the objective lens from different positions to form excitations of the sample at different angles. A common method is position excitation in the matrix form, such as 5*5 angles or 9*9 angles, or multi-angle excitation of uniformly distributed circular pupil positions. Images obtained through the multi-angle excitation are subjected to deconvolution for three-dimensional reconstruction, and then complete three-dimensional imaging information of the sample can be obtained.

It can be understood that, the phase difference will be brought to the optical system due to the inevitable distortion. In the embodiments of the present application, the phase distribution of the pupil plane may be effectively estimated; new PSFs at multiple angles are generated through the estimated phase; and the PSFs obtained through corresponding phase retrieval are subjected to deconvolution for three-dimensional reconstruction. The performance will be greatly better than that of theoretical PSFs generated under a rotational average and an ideal situation.

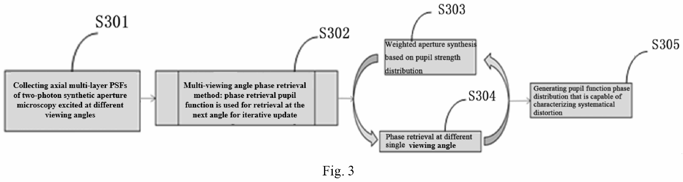

Then, as shown in Fig. 3, the method in the embodiments of the present application may include the following actions.

At S301: An axial multi-layer PSF of the two-photon synthetic aperture microscopy excited at different viewing angles is collected.

In the embodiments of the present application, the axial multi-layer PSF of the two-photon synthetic aperture microscopy excited at different viewing angles may be collected; and the measured strength value of the PSF at different axial positions will be used for replacing the calculated strength distribution.

At S302: Multi-viewing angle phase retrieval method is provided: the phase retrieval pupil function is used for retrieval at the next angle for iterative update.

In the embodiments of the present application, a single-viewing angle pupil function obtained through one phase retrieval may serve as an initial phase retrieval value at the next angle for iterative update.

At S303: Weighted aperture synthesis based on pupil strength distribution is performed.

At S304: Phase retrieval at different single viewing angles is performed.

At S305: Pupil function phase distribution that is capable of characterizing systematical distortion is generated.

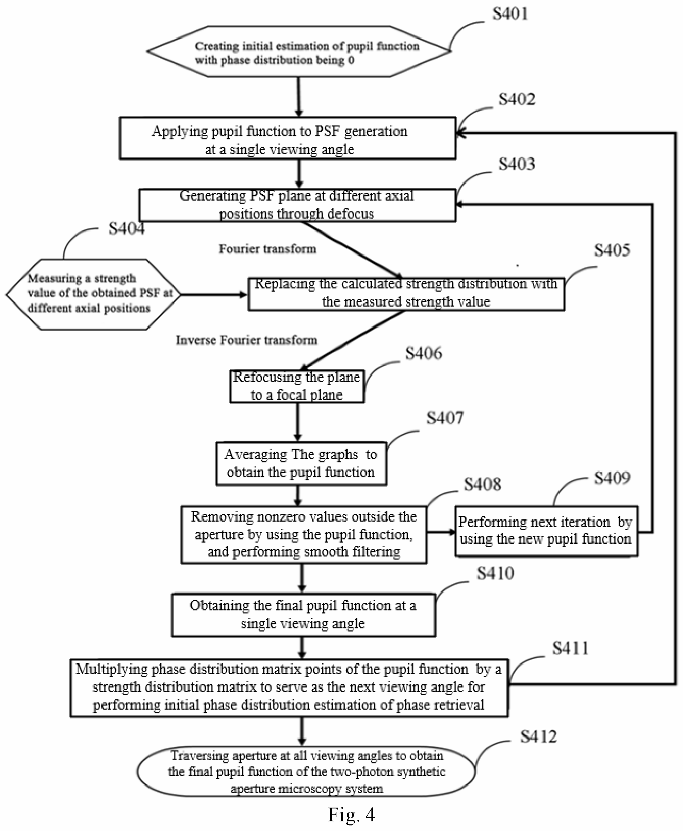

As shown in Fig. 4, the method in the embodiments of the present application may include the following steps:

At S401: Initial estimation of the pupil function with phase distribution being 0 is created.

At S402: The pupil function is used for PSF generation at a single viewing angle.

At S403: A PSF plane at different axial positions is generated through defocus.

At S404: A strength value of the obtained PSF at different axial positions is measured.

At S405: The calculated strength distribution is replaced with the measured strength value.

In the embodiments of the present application, the plane at different axial positions may be subjected to Fourier transform to obtain respective strength distribution and phase distribution.

At S406: The plane is refocused to a focal plane.

Each complex field in the embodiments of the present application is subjected to inverse Fourier transform and then refocused to a focal plane image.

At S407: The graphs are averaged to obtain the pupil function.

In the embodiments of the present application, corresponding graphs may be averaged to obtain a new pupil function.

At S408: Nonzero values outside the aperture are removed by using the pupil function, and smooth filtering is performed.

At S409: Next iteration is performed by using the new pupil function.

At S410: The final pupil function at a single viewing angle is obtained.

At S411: Phase distribution matrix points of the pupil function are multiplied by a strength distribution matrix to serve as the next viewing angle for performing initial phase distribution estimation of phase retrieval.

In the embodiments of the present application, final pupil function points at the single viewing angle obtained through iteration convergence are multiplied by a pupil function strength distribution matrix at the corresponding viewing angle (the strength distribution matrix serves as weights); and then the product serves as initial phase distribution of phase retrieval at the next angle for performing single-viewing angle phase retrieval estimation.

At S412: The aperture at all viewing angles is traversed to obtain the final pupil function of the two-photon synthetic aperture microscopy system.

In the embodiments of the present application, all the viewing angles may be traversed for one round of iteration; and multiple rounds of iteration are performed until final pupil function convergence of the two-photon synthetic aperture microscopy system.

The frequency domain phase retrieval method for two-photon synthetic aperture microscopy according to embodiments of the present application is provided. The Point Spread Functions of the system under different viewing angles calculated through the pupil function, effect of the reconstruction algorithm and quality of the reconstruction result in the two-photon synthetic aperture microscopy method are increased; and PSFs extracted from the pupil function are subjected to deconvolution for three-dimensional reconstruction by estimating the phase difference in the optical system, so that better reconstruction performance is ensured, and the performance is better than that of theoretical PSFs generated under a rotational average and an ideal situation. Therefore, the problems in the related art that the optical strength distribution is changed since the micro-lens array used for generating multi-angle information is arranged on the pupil plane or the image plane of light field microscopy, phase retrieval is difficult, the effect and the quality of the image reconstruction result are difficultly increased and better reconstruction performance cannot be ensured are solved.

Then, the frequency domain phase retrieval apparatus for the two-photon synthetic aperture microscopy according to embodiments of the present application is described with reference to drawings.

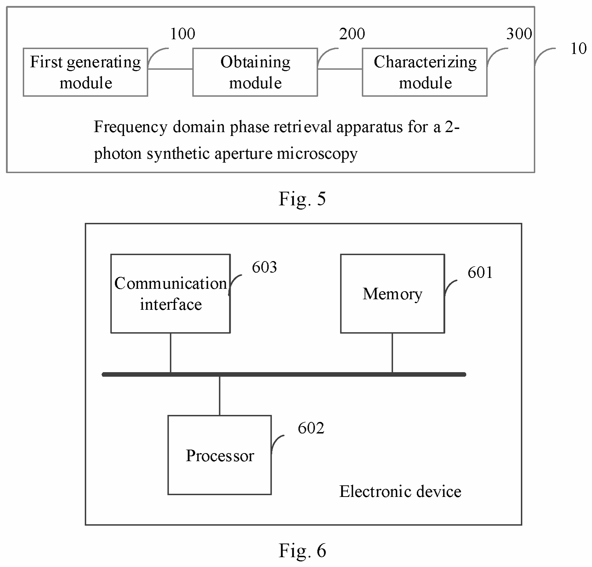

Fig. 5 is a schematic structural diagram of a frequency domain phase retrieval apparatus for a two-photon synthetic aperture microscopy according to embodiments of the present application.

As shown in Fig. 5, the frequency domain phase retrieval apparatus 10 for two-photon synthetic aperture microscopy includes: a first generating module 100, an obtaining module 200 and a characterizing module 300.

Specifically, the first generating module 100 is configured to perform phase retrieval at different single viewing angles based on the two-photon synthetic aperture microscopy to generate phase retrieval pupil functions.

The obtaining module 200 is configured to perform phase retrieval initial estimation by taking a pupil function at a previous viewing angle as a pupil function at a next viewing angle to perform aperture synthesis, and traverse all angular distribution in a light field, to obtain multiple rounds of pupil function phase distribution.

The characterizing module 300 is configured to generate a final pupil function until phase distribution convergence based on the multiple rounds of pupil function phase distribution, to characterize pupil function phase distribution of systematical distortion.

**In** an embodiment of the present application, the first generating module 100 includes: a collection unit and a simulation unit.

The collection unit is configured to collect axial multi-layer Point Spread Functions, PSFs, of the two-photon synthetic aperture microscopy excited at different viewing angles.

The simulation unit is configured to generate the pupil functions based on the axial multi-layer PSFs to simulate an objective lens and phase differences in an optical system.

In an embodiment of the present application, the obtaining module 200 includes: an obtaining unit.

The obtaining unit is configured to obtain the initial estimation based on phase points obtained at the previous viewing angle and a strength distribution matrix of optical strength at the previous viewing angle.

In an embodiment of the present application, the frequency domain phase retrieval apparatus 10 for two-photon synthetic aperture microscopy further includes: an extracting module and a second generating module.

The extracting module is configured to extract PSFs from the final pupil function.

The second generating module is configured to perform deconvolution for three-dimensional reconstruction based on the PSFs to generate a reconstruction result.

It should be noted that, the above explanation of the embodiments of the frequency domain phase retrieval method for two-photon synthetic aperture microscopy is also applicable to the frequency domain phase retrieval apparatus for the two-photon synthetic aperture microscopy in the present embodiment. Unnecessary details are not given herein.

The frequency domain phase retrieval apparatus for two-photon synthetic aperture microscopy according to embodiments of the present application is provided. The Point Spread Functions of the system under different viewing angles calculated through the pupil function, effect of the reconstruction algorithm and quality of the reconstruction result in the two-photon synthetic aperture microscopy method are increased; and PSFs extracted from the pupil function are subjected to deconvolution for three-dimensional reconstruction by estimating the phase difference in the optical system, so that better reconstruction performance is ensured, and the performance is better than that of theoretical PSFs generated under a rotational average and an ideal situation. Therefore, the problems in the related art that the optical strength distribution is changed since the micro-lens array used for generating multi-angle information is arranged on the pupil plane or the image plane of light field microscopy, phase retrieval is difficult, the effect and the quality of the image reconstruction result are difficultly increased and better reconstruction performance cannot be ensured are solved.

Fig. 6 is a schematic structural diagram of an electronic device according to embodiments of the present application. The electronic device may include:
a memory 601, a processor 602, and a computer program that is stored in the memory 601 and executable in the processor 602.

The processor 602 is configured to implement, when executing the computer program, the frequency domain phase retrieval method for two-photon synthetic aperture microscopy according to the above embodiments.

Further, the electronic device includes:
a communication interface 603 configured for communication between the memory 601 and the processor 602.

The memory 601 is configured to store the computer program that is executable in the processor 602.

The memory 601 may include a high-speed RAM memory and may further include a non-volatile memory, such as at least one disk memory.

If the memory 601, the processor 602 and the communication interface 603 are implemented independently, the communication interface 603, the memory 601 and the processor 602 may be connected with one another through buses to implement communication with one another. The buses may be an Industry Standard Architecture (ISA) bus, a Peripheral Component Interconnect (PCI) bus or an Extended Industry Standard Architecture (EISA) bus, etc. The buses may be divided into an address bus, a data bus, a control bus and the like. For simple representation, the buses are only represented by a thick line in Fig. 6, but it does not mean that there is only one bus or one kind of bus.

In a specific implementation, if the memory 601, the processor 602 and the communication interface 603 are integrated on one chip, communication among the memory 601, the processor 602 and the communication interface 603 may be implemented through an internal interface.

The processor 602 may be a Central Processing Unit (CPU), or an Application Specific Integrated Circuit (ASIC), or be configured as one or more integrated circuits for implementing the embodiments of the present application.

The present embodiment further provides a computer readable storage medium which has a computer program stored thereon. The above frequency domain phase retrieval method for two-photon synthetic aperture microscopy is implemented when the computer program is executed by the processor.

In the description of the specification, the description of reference terms "an embodiment", "some embodiments", "example", "specific example" or "some examples", etc. means that specific features, structures, materials or characteristics illustrated in combination with the embodiment or example are included in at least one embodiment or example of the present application. In this specification, exemplary statements for the above terms do not must aim at the same embodiment or example. Moreover, the described specific features, structures, materials or characteristics can be combined appropriately in any one or N embodiments or examples. In addition, without conflict, those skilled in the art can combine and integrate different embodiments or examples illustrated in the specification and the features of different embodiments or examples.

In addition, the terms such as "first" and "second" are only used for the purpose of description, rather than being understood to indicate or imply relative importance or hint the number of indicated technical features. Thus, the features limited by "first" and "second" can explicitly or impliedly comprise at least one of the features. In the description of the present application, the meaning of "N" is at least two, such as two, three, etc. unless otherwise clearly specified.

The flow chart or any procedure or method description described in any other manner herein may be understood to represent a module, a fragment or a part including codes of executable instructions in one or N steps used for realizing customized logic functions or procedures. Moreover, the scope of preferred implementations of the present application includes additional implementations, throughout which the functions may be executed out of the illustrated or discussed sequence, including a basically simultaneous manner or a reverse order according to the involved functions, which should be understood by those skilled in the art in the embodiments of the present application.

Logics and/or steps represented in the flow chart or described herein in other modes, i.e., a definite sequence table of executable instructions that may be considered to be used for realizing logic functions, may be specifically implemented in any computer readable medium to be used by instruction execution systems, apparatuses or devices (such as a computer-based system, a system including a processor, or any other system that can fetch instructions from the instruction execution system, apparatus or device and execute the instructions), or to be used in combination with these instruction execution systems, apparatuses or devices. For the present description, the "computer readable medium" may be any apparatus that may include, store, communicate, propagate or transmit programs to be used by the instruction execution systems, apparatuses or devices or to be used in combination with these instruction execution systems, apparatuses or devices. More specific examples (a non-exhaustive list) of the computer readable medium include: an electrical connection part (electronic apparatus) having one or N wirings, a portable computer cassette (magnetic apparatus), a random access memory (RAM), a read-only memory (ROM), an erasable programmable read-only memory (EPROM or a flash memory), an optical fiber apparatus and a portable CD read-only memory (CDROM). In addition, the computer readable medium even may be paper on which the programs may be printed or any other appropriate medium, because the paper or any other medium may be subjected to optical scanning and then edited and interpreted or the programs are obtained electronically by processing the paper or any other medium in any other appropriate manner when necessary. Then, the programs are stored in the computer memory.

It should be understood that, various parts of the present application may be implemented by hardware, software, firmware or combinations thereof. In the above implementations, N steps or methods may be implemented by software or firmware that is stored in the memory and executed by an appropriate instruction execution system. For example, if the implementation by hardware is the same as that in another implementation, the steps or methods may be implemented by any or a combination thereof in the following known technologies in the art: a discrete logic circuit having a logic gate circuit used for realizing logic functions for data signals, an application-specific integrated circuit having an appropriate combinational logic gate circuit, a programmable gate array (PGA), a field-programmable gate array (FPGA), etc.

Those ordinary skilled in the art may understand that, total or partial steps for realizing the method in the above embodiments may be completed by programs instructing associated hardware. The programs may be stored in a computer readable storage medium. The programs include one of the steps in the method embodiments or a combination of the steps during execution.

In addition, various functional units in each embodiment of the present application may be integrated in a processing module; each unit may also be of physical existence alone; and two or more units may also be integrated in a module. The above integrated module may be implemented in the form of hardware, and may also be implemented in the form of software function module. If implemented in the form of software function module and sold or used serving as an independent product, the integrated module may also be stored in a computer readable storage medium.

The above mentioned storage medium may be a read-only memory, a magnetic disk or a compact disc. Although the embodiments of the present application have been illustrated and described above, it should be understood that, the above embodiments are illustrative and cannot be understood as a limitation to the present application. Changes, modifications, replacements and transformations of the above embodiments may be made by those ordinary skilled in the art in the scope of the present application.

## Claims

1. A frequency domain phase retrieval method for a two-photon synthetic aperture microscopy, **characterized in** comprising:
S1: sequentially performing (S101) phase retrieval at a plurality of single viewing angles based on the two-photon synthetic aperture microscopy to generate phase retrieval pupil functions at the plurality of single viewing angles, wherein for each viewing angle among the plurality of viewing angles, the phase retrieval pupil function is obtained by using a pupil function obtained from a previous viewing angle as an initial estimate to perform phase retrieval for a current viewing angle, thereby implementing aperture synthesis;
S2: traversing all the plurality of single viewing angles in a light field, to obtain a pupil function after one round of iteration (S102); and
S3: generating (S103) a final pupil function by iteratively performing the operations of S1 and S2 until a phase distribution of the pupil function after multiple rounds of iteration converges, to characterize pupil function phase distribution of systematical distortion.

2. The method according to claim 1, wherein the performing phase retrieval at the plurality of single viewing angles to generate the phase retrieval pupil functions at the plurality of single viewing angles comprises:
collecting axial multi-layer Point Spread Functions, PSFs, of the two-photon synthetic aperture microscopy excited at the plurality of viewing angles; and
generating the phase retrieval pupil functions based on the axial multi-layer PSFs to simulate an objective lens and phase differences in an optical system.

3. The method according to claim 1, wherein the using the phase retrieval pupil function at the previous viewing angle of the viewing angle as the initial estimation for phase retrieval at the current viewing angle to implement aperture synthesis comprises:
obtaining the initial estimation based on phase points of the phase retrieval pupil function at the previous viewing angle and a strength distribution matrix of optical strength at the previous viewing angle.

4. The method according to claim 1, further comprising:
extracting Point Spread Functions, PSFs, from the final pupil function; and
performing deconvolution for three-dimensional reconstruction based on the PSFs to generate a reconstruction result.

5. A frequency domain phase retrieval apparatus for a two-photon synthetic aperture microscopy, **characterized in** comprising:
a first generating module (100) configured to sequentially perform phase retrieval at a plurality of single viewing angles based on the two-photon synthetic aperture microscopy to generate phase retrieval pupil functions at the plurality of single viewing angles, wherein for each viewing angle among the plurality of viewing angles, the phase retrieval pupil function is obtained by using a pupil function obtained from a previous viewing angle as an initial estimate to perform phase retrieval for a current viewing angle, thereby implementing aperture synthesis;
an obtaining module (200) configured to traverse all the plurality of single viewing angles in a light field, to obtain a pupil function after one round of iteration; and
a characterizing module (300) configured to generate a final pupil function by iteratively performing the operations configured for the first generating module and the obtaining module until a phase distribution of the pupil function after multiple rounds of iteration converges, to characterize pupil function phase distribution of systematical distortion.

6. The apparatus according to claim 5, wherein the first generating module comprises:
a collection unit configured to collect axial multi-layer Point Spread Functions, PSFs, of the two-photon synthetic aperture microscopy excited at the plurality of viewing angles; and
a simulation unit configured to generate the phase retrieval pupil functions based on the axial multi-layer PSFs to simulate an objective lens and phase differences in an optical system.

7. The apparatus according to claim 5, wherein the obtaining module comprises:
an obtaining unit configured to obtain the initial estimation based on phase points of the phase retrieval pupil function at the previous viewing angle and a strength distribution matrix of optical strength at the previous viewing angle.

8. The apparatus according to claim 5, further comprising:
an extracting module configured to extract Point Spread Functions, PSFs, from the final pupil function; and
a second generating module configured to perform deconvolution for three-dimensional reconstruction based on the PSFs to generate a reconstruction result.

9. An electronic device, comprising: a memory (601), a processor (602), and a computer program stored in the memory (601) and executable on the processor (602), wherein the processor (602) is configured to implement, when executing the computer program, the frequency domain phase retrieval method for the two-photon synthetic aperture microscopy according to any one of claims 1 to 4.

10. A computer readable storage medium, having a computer program stored thereon, wherein the computer program, when executed by the processor, implements the frequency domain phase retrieval method for the two-photon synthetic aperture microscopy according to any one of claims 1 to 4.

## Patentansprüche

1. Verfahren zur Phasenrekonstruktion im Frequenzbereich für eine Zweiphotonen-Mikroskopie mit synthetischer Apertur, **dadurch gekennzeichnet, dass** es umfasst:
S1: aufeinanderfolgendes Durchführen (S101) einer Phasenrekonstruktion bei mehreren einzelnen Betrachtungswinkeln auf der Grundlage der Zweiphotonen-Mikroskopie mit synthetischer Apertur, um Phasenrekonstruktions-Pupillenfunktionen bei den mehreren einzelnen Betrachtungswinkeln zu erzeugen, wobei für jeden Betrachtungswinkel der mehreren Betrachtungswinkel die Phasenrekonstruktions-Pupillenfunktion erhalten wird, indem eine Pupillenfunktion, die von einem vorherigen Betrachtungswinkel erhalten wurde, als anfängliche Schätzung verwendet wird, um eine Phasenrekonstruktion für einen aktuellen Betrachtungswinkel durchzuführen, wodurch eine Apertursynthese implementiert wird;
S2: Durchlaufen sämtlicher der mehreren einzelnen Betrachtungswinkel in einem Lichtfeld, um eine Pupillenfunktion nach einem Iterationsdurchlauf (S102) zu erhalten; und
S3: Erzeugen (S103) einer endgültigen Pupillenfunktion durch iteratives Durchführen der Vorgänge S1 und S2, bis eine Phasenverteilung der Pupillenfunktion nach mehreren Iterationsdurchläufen konvergiert, um eine Phasenverteilung der Pupillenfunktion einer systembedingten Verzerrung zu charakterisieren.

2. Verfahren nach Anspruch 1, wobei das Durchführen der Phasenrekonstruktion bei den mehreren einzelnen Betrachtungswinkeln, um die Phasenrekonstruktions-Pupillenfunktionen bei den mehreren einzelnen Betrachtungswinkeln zu erzeugen, Folgendes umfasst:
Erfassen axialer mehrschichtiger Punktspreizfunktionen (PSFs), die bei den mehreren Betrachtungswinkeln mittels der Zweiphotonen-Mikroskopie mit synthetischer Apertur angeregt werden; und
Erzeugen der Phasenrekonstruktions-Pupillenfunktionen auf der Grundlage der axialen mehrschichtigen PSFs, um eine Objektivlinse und Phasendifferenzen in einem optischen System zu simulieren.

3. Verfahren nach Anspruch 1, wobei das Verwenden der Phasenrekonstruktions-Pupillenfunktion beim vorherigen Betrachtungswinkel als anfängliche Schätzung für die Phasenrekonstruktion beim aktuellen Betrachtungswinkel, um Apertursynthese zu implementieren, Folgendes umfasst:
Erhalten der anfänglichen Schätzung auf der Grundlage von Phasenpunkten der Phasenrekonstruktions-Pupillenfunktion bei dem vorherigen Betrachtungswinkel und einer Intensitätsverteilungsmatrix der Lichtintensität bei dem vorherigen Betrachtungswinkel.

4. Verfahren nach Anspruch 1, ferner umfassend:
Extrahieren von Punktspreizfunktionen (PSFs) aus der endgültigen Pupillenfunktion; und
Durchführen einer Dekonvolution für dreidimensionale Rekonstruktion auf der Grundlage der PSFs, um ein Rekonstruktionsergebnis zu erzeugen.

5. Vorrichtung zur Phasenrekonstruktion im Frequenzbereich für eine Zweiphotonen-Mikroskopie mit synthetischer Apertur, **dadurch gekennzeichnet, dass** sie umfasst:
ein erstes Erzeugungsmodul (100), das dazu eingerichtet ist, auf der Grundlage der Zweiphotonen-Mikroskopie mit synthetischer Apertur bei mehreren einzelnen Betrachtungswinkeln aufeinanderfolgend eine Phasenrekonstruktion durchzuführen, um Phasenrekonstruktions-Pupillenfunktionen bei den mehreren einzelnen Betrachtungswinkeln zu erzeugen, wobei für jeden Betrachtungswinkel der mehreren Betrachtungswinkel die Phasenrekonstruktions-Pupillenfunktion erhalten wird, indem eine bei einem vorhergehenden Betrachtungswinkel erhaltene Pupillenfunktion als anfängliche Schätzung verwendet wird, um eine Phasenrekonstruktion für einen aktuellen Betrachtungswinkel durchzuführen, wodurch eine Apertursynthese implementiert wird;
ein Ermittlungsmodul (200), das dazu eingerichtet ist, sämtliche der mehreren einzelnen Betrachtungswinkel in einem Lichtfeld zu durchlaufen, um eine Pupillenfunktion nach einem Iterationsdurchlauf zu erhalten; und
ein Charakterisierungsmodul (300), das dazu eingerichtet ist, durch iteratives Durchführen der für das erste Erzeugungsmodul und das Ermittlungsmodul eingerichteten Vorgänge eine endgültige Pupillenfunktion zu erzeugen, bis eine Phasenverteilung der Pupillenfunktion nach mehreren Iterationsdurchläufen konvergiert, um eine Phasenverteilung der Pupillenfunktion einer systembedingten Verzerrung zu charakterisieren.

6. Vorrichtung nach Anspruch 5, wobei das erste Erzeugungsmodul umfasst:
eine Erfassungseinheit, die dazu eingerichtet ist, axiale mehrschichtige Punktspreizfunktionen (PSFs), die bei den mehreren Betrachtungswinkeln mittels der Zweiphotonen-Mikroskopie mit synthetischer Apertur angeregt werden, zu erfassen; und
eine Simulationseinheit, die dazu eingerichtet ist, die Phasenrekonstruktions-Pupillenfunktionen auf der Grundlage der axialen mehrschichtigen PSFs zu erzeugen, um eine Objektivlinse und Phasendifferenzen in einem optischen System zu simulieren.

7. Vorrichtung nach Anspruch 5, wobei das Ermittlungsmodul umfasst:
eine Ermittlungseinheit, die dazu eingerichtet ist, die anfängliche Schätzung auf der Grundlage von Phasenpunkten der Phasenrekonstruktions-Pupillenfunktion bei dem vorherigen Betrachtungswinkel und einer Intensitätsverteilungsmatrix der Lichtintensität bei dem vorherigen Betrachtungswinkel zu erhalten.

8. Vorrichtung nach Anspruch 5, ferner umfassend:
ein Extraktionsmodul, das dazu eingerichtet ist, Punktspreizfunktionen (PSFs) aus der endgültigen Pupillenfunktion zu extrahieren; und
ein zweiter Erzeugungsmodul, das dazu eingerichtet ist, eine Dekonvolution für dreidimensionale Rekonstruktion auf der Grundlage der PSFs durchzuführen, um ein Rekonstruktionsergebnis zu erzeugen.

9. Elektronisches Gerät, umfassend: einen Speicher (601), einen Prozessor (602) und ein in dem Speicher (601) gespeichertes und auf dem Prozessor (602) ausführbares Computerprogramm, wobei der Prozessor (602) dazu eingerichtet ist, beim Ausführen des Computerprogramms das Verfahren zur Phasenrekonstruktion im Frequenzbereich für eine Zweiphotonen-Mikroskopie mit synthetischer Apertur nach einem der Ansprüche 1 bis 4 auszuführen.

10. Computerlesbares Speichermedium mit einem darauf gespeicherten Computerprogramm, wobei das Computerprogramm, wenn es von dem Prozessor ausgeführt wird, das Verfahren zur Phasenrekonstruktion im Frequenzbereich für eine Zweiphotonen-Mikroskopie mit synthetischer Apertur nach einem der Ansprüche 1 bis 4 ausgeführt.

## Revendications

1. Méthode de récupération de phase dans le domaine fréquentiel pour une microscopie à ouverture synthétique à deux photons, **caractérisée en ce qu'**elle comprend :
S1 : exécuter séquentiellement (S101) une récupération de phase à une pluralité d'angles de vue uniques sur la base de la microscopie à ouverture synthétique à deux photons pour générer des fonctions de pupille de récupération de phase à la pluralité d'angles de vue uniques, dans laquelle pour chaque angle de vue parmi la pluralité d'angles de vue, la fonction de pupille de récupération de phase est obtenue en utilisant une fonction de pupille obtenue à partir d'un angle de vue précédent comme estimation initiale pour effectuer une récupération de phase pour un angle de vue actuel, mettant ainsi en œuvre la synthèse d'ouverture ;
S2 : parcourir l'ensemble de la pluralité d'angles de vue uniques dans un champ lumineux, pour obtenir une fonction de pupille après un cycle d'itération (S102) ; et
S3 : générer (S103) une fonction de pupille finale en exécutant de manière itérative les opérations de S1 et S2 jusqu'à ce qu'une distribution de phase de la fonction de pupille après de multiples cycles d'itération converge, pour caractériser la distribution de phase de fonction de pupille d'une distorsion systématique.

2. Méthode selon la revendication 1, dans laquelle l'exécution de la récupération de phase à la pluralité d'angles de vue uniques pour générer les fonctions de pupille de récupération de phase à la pluralité d'angles de vue uniques comprend :
collecter des fonctions d'étalement du point multicouches axiales, PSF, de la microscopie à ouverture synthétique à deux photons excitées à la pluralité d'angles de vue ; et
générer les fonctions de pupille de récupération de phase sur la base des PSF multicouches axiales pour simuler une lentille d'objectif et des différences de phase dans un système optique.

3. Méthode selon la revendication 1, dans laquelle l'utilisation de la fonction de pupille de récupération de phase à l'angle de vue précédent de l'angle de vue en tant qu'estimation initiale pour la récupération de phase à l'angle de vue actuel pour mettre en œuvre la synthèse d'ouverture comprend :
obtenir l'estimation initiale sur la base de points de phase de la fonction de pupille de récupération de phase à l'angle de vue précédent et d'une matrice de distribution d'intensité de l'intensité optique à l'angle de vue précédent.

4. Le procédé selon la revendication 1, comprenant en outre :
extraire des fonctions d'étalement du point, PSF, à partir de la fonction de pupille finale ; et
exécuter une déconvolution pour une reconstruction tridimensionnelle sur la base des PSF afin de générer un résultat de reconstruction.

5. Appareil de récupération de phase dans le domaine fréquentiel pour une microscopie à ouverture synthétique à deux photons, **caractérisé en ce qu'**il comprend :
un premier module de génération (100) configuré pour exécuter séquentiellement une récupération de phase à une pluralité d'angles de vue uniques sur la base de la microscopie à ouverture synthétique à deux photons pour générer des fonctions de pupille de récupération de phase à la pluralité d'angles de vue uniques, dans lequel, pour chaque angle de vue parmi la pluralité d'angles de vue, la fonction de pupille de récupération de phase est obtenue en utilisant une fonction de pupille obtenue à partir d'un angle de vue précédent comme estimation initiale pour exécuter une récupération de phase pour un angle de vue actuel, mettant ainsi en œuvre la synthèse d'ouverture ;
un module d'obtention (200) configuré pour parcourir l'ensemble de la pluralité d'angles de vue uniques dans un champ lumineux, pour obtenir une fonction de pupille après un cycle d'itération ; et
un module de caractérisation (300) configuré pour générer une fonction de pupille finale en exécutant de manière itérative les opérations configurées pour le premier module de génération et le module d'obtention jusqu'à ce qu'une distribution de phase de la fonction de pupille après de multiples cycles d'itération converge, pour caractériser la distribution de phase de fonction de pupille d'une distorsion systématique.

6. Appareil selon la revendication 5, dans lequel le premier module de génération comprend :
une unité de collecte configurée pour collecter des fonctions d'étalement du point multicouches axiales, PSF, de la microscopie à ouverture synthétique à deux photons excitées à la pluralité d'angles de vue ; et
une unité de simulation configurée pour générer les fonctions de pupille de récupération de phase sur la base des PSF multicouches axiales pour simuler une lentille d'objectif et des différences de phase dans un système optique.

7. Appareil selon la revendication 5, dans lequel le module d'obtention comprend :
une unité d'obtention configurée pour obtenir l'estimation initiale sur la base de points de phase de la fonction de pupille de récupération de phase à l'angle de vue précédent et d'une matrice de distribution d'intensité de l'intensité optique à l'angle de vue précédent.

8. Appareil selon la revendication 5, comprenant en outre :
un module d'extraction configuré pour extraire des fonctions d'étalement du point, PSF, à partir de la fonction de pupille finale ; et
un second module de génération configuré pour exécuter une déconvolution pour une reconstruction tridimensionnelle sur la base des PSF afin de générer un résultat de reconstruction.

9. Dispositif électronique, comprenant : une mémoire (601), un processeur (602), et un programme informatique stocké dans la mémoire (601) et exécutable sur le processeur (602), dans lequel le processeur (602) est configuré pour mettre en œuvre, lors de l'exécution du programme informatique, la méthode de récupération de phase dans le domaine fréquentiel pour la microscopie à ouverture synthétique à deux photons selon l'une quelconque des revendications 1 à 4.

10. Support de stockage lisible par ordinateur, sur lequel est stocké un programme informatique, dans lequel le programme informatique, lorsqu'il est exécuté par le processeur, met en œuvre la méthode de récupération de phase dans le domaine fréquentiel pour la microscopie à ouverture synthétique à deux photons selon l'une quelconque des revendications 1 à 4.
